# EUROPÄISCHE PATENTANMELDUNG

(11) **EP 3 780 309 A1**
(43) Veröffentlichungstag der Anmeldung: **17.02.2021**
(21) Anmeldenummer: 19192047.9
(22) Anmeldetag: 16.08.2019
(51) Int. Cl.: H02J 3/08, H02J 3/38, H02J 3/40

(54) **SYNCHRONISATION EINES INSELNETZES**

(71) Anmelder: Siemens Aktiengesellschaft, 80333 München (DE)
(72) Erfinder: Amthor, Arvid, 98631 Grabfeld OT Nordheim (DE); Hörmann, Walter, 2201 Gerasdorf bei Wien (AT); Reischböck, Markus, 91056 Erlangen (DE)

(57) **Zusammenfassung**

Es wird ein Verfahren zur Synchronisation eines Inselnetzes (1) mit einem bezüglich des Inselnetzes externen Stromnetzes (3) vorgeschlagen, wobei das Inselnetz (1) im Inselbetrieb (41) durch eine Sekundärregelung (4) bezüglich seiner Spannung und Frequenz regelbar ist, und für die Sekundärregelung (4) als Sollwerte ein Normwert der Spannung (21) des Inselnetzes (1) und ein Normwert der Frequenz (22) des Inselnetzes (1) verwendet werden. Erfindungsgemäße werden zur Synchronisation ein Messwert der Spannung (31) des externen Stromnetzes (3) und ein Messwert der Frequenz (32) des externen Stromnetzes (3) als Sollwerte der Sekundärregelung (4) verwendet.

Weiterhin betrifft die Erfindung eine Sekundärregelung (4).

## Beschreibung

Die Erfindung betrifft Verfahren zur Synchronisation eines Inselnetzes gemäß dem Oberbegriff des Patentanspruches 1 sowie eine Sekundärregelung eines Inselnetzes gemäß dem Oberbegriff des Patentanspruches 7.

Ein Inselnetz (englisch: Microgrid) ist ein lokal abgegrenztes Stromnetz, das typischerweise bei Bedarf mit einem bezüglich des Inselnetzes externen Stromnetz (englisch: Macrogrid) verbunden werden kann. Für den Inselbetrieb weist das Inselnetz zur Stromerzeugung eigene Wechselstromgeneratoren auf.

Im Inselbetrieb muss sichergestellt werden, dass die erzeugte elektrische Leistung mit der verbrauchten oder geforderten elektrischen Leistung in Übereinstimmung gebracht wird. Dies erfolgt typischerweise mittels einer frequenzbasierten Regelung des Inselnetzes. Innerhalb oder während des Inselbetriebes können die Frequenz und Spannung des Inselnetzes von der Frequenz und Spannung des externen Stromnetzes dennoch abweichen. Weiterhin ist die Phase beziehungsweise der Phasenwinkel zwischen dem Inselnetz und dem externen Stromnetz typischerweise verschieden. Mit anderen Worten ist das Inselnetz typischerweise asynchron zum externen Stromnetz.

Somit ist zum Verbinden des Inselnetzes mit dem externen Stromnetz eine Synchronisation des Inselnetzes mit dem externen Stromnetz erforderlich. Hierbei sollte die Verbindung nur dann hergestellt werden, wenn die Spannungen, die Frequenzen und die Phasenwinkel der beiden Stromnetze innerhalb eines Toleranzbereiches übereinstimmen. Sind die genannten Bedingungen nicht erfüllt, könnten Komponenten des Inselnetzes beschädigt werden.

Nach dem Stand der Technik wird die Synchronisation durch speziell dafür vorgesehene oder ausgebildete Synchronisationseinheiten durchgeführt. Hierzu wird typischerweise ein isochroner Generator verwendet. Allerdings kann durch die bekannten Verfahren lediglich jeweils nur dieser eine Generator mit dem externen Stromnetz synchronisiert werden.

Der vorliegenden Erfindung liegt die Aufgabe zugrunde, eine verbesserte Synchronisation eines Inselnetzes mit einem externen Stromnetz bereitzustellen.

Die Aufgabe wird durch ein Verfahren mit den Merkmalen des unabhängigen Patentanspruches 1 sowie durch eine Vorrichtung mit den Merkmalen des unabhängigen Patentanspruches 7 gelöst. In den abhängigen Patentansprüchen sind vorteilhafte Ausgestaltungen und Weiterbildungen der Erfindung angegeben.

Bei dem erfindungsgemäßen Verfahren zur Synchronisation eines Inselnetzes mit einem bezüglich des Inselnetzes externen Stromnetz werden für eine Sekundärregelung als Sollwerte ein Normwert der Spannung des Inselnetzes und ein Normwert der Frequenz des Inselnetzes verwendet. Hierbei ist das Inselnetz im Inselbetrieb durch die Sekundärregelung bezüglich seiner Spannung und Frequenz regelbar. Das erfindungsgemäße Verfahren ist gekennzeichnet dadurch, dass zur Synchronisation ein Messwert der Spannung des externen Stromnetzes und ein Messwert der Frequenz des externen Stromnetzes als Sollwerte der Sekundärregelung verwendet werden.

Ergänzend kann zur Synchronisation ein Messwert der Phase des externen Stromnetzes als Sollwert der Sekundärregelung, die somit ebenfalls zur Regelung der Phase des Inselnetzes ausgebildet ist, verwendet werden.

Typischerweise werden Inselnetze mittels einer Primärreglung, einer Sekundärregelung und einer Tertiärregelung geregelt beziehungsweise gesteuert. Der Begriff des Steuerns und des Regelns wird vorliegend als Äquivalent angesehen. Die Sekundärregelung kann ebenfalls als Sekundärregler bezeichnet werden beziehungsweise wird die Sekundärregelung durch einen Sekundärregler ausgebildet.

Gemäß der vorliegenden Erfindung wird die Sekundärregelung des Inselnetzes für die Synchronisation verwendet. Hierzu werden für die Sekundärregelung während der Synchronisation Messwerte der Spannung und Frequenz des externen Stromnetzes als Sollwerte verwendet. Im Inselbetrieb beziehungsweise während des Inselbetriebes sind hingegen die Sollwerte der Sekundärregelung durch die Normwerte der Spannung und Frequenz gegeben. Mit anderen Worten werden die Sollwerte der Sekundärregelung für die Synchronisation verändert, ausgetauscht und/oder ersetzt.

Ein Vorteil der vorliegenden Erfindung ist, dass im Wesentlichen alle Komponenten des Inselnetzes zur Synchronisation beitragen. Das ist deshalb der Fall, da die Komponenten des Inselnetzes typischerweise über eine jeweilige Primärregelung mit der Sekundärregelung gekoppelt sind. Dadurch ist die Synchronisation beziehungsweise der Synchronisationsprozess beziehungsweise das Synchronisationsverfahren unabhängig von der Anzahl der Komponenten des Inselnetzes. Weiterhin erfolgt die Synchronisation schneller, da im Wesentlichen alle Komponenten zur Synchronisation verwendet werden. Ferner können Investitionskosten eingespart werden, da bekannte Synchronisationseinheiten gemäß der vorliegenden Erfindung nicht erforderlich sind, da die Synchronisation vorliegend durch die Sekundärregelung durchgeführt wird. Ergänzend kann eine weitere Synchronisationseinheit vorgesehen sein.

Weiterhin erfordern bekannte Verfahren die Platzierung eines entsprechend ausreichenden und bezüglich der Synchronisation führenden Generators in der Nähe des Netzanschlusspunktes. Dieser Generator kann gemäß der vorliegenden Erfindung ebenfalls entfallen.

Die erfindungsgemäße Sekundärregelung beziehungsweise der erfindungsgemäße Sekundärregler ist dadurch gekennzeichnet, dass die Sekundärregelung beziehungsweise der Sekundärregler zur Durchführung eines Verfahrens gemäß der vorliegenden Erfindung und/oder einer ihrer Ausgestaltungen ausgebildet ist.

Es ergeben sich zum erfindungsgemäßen Verfahren gleichartige und gleichwertige Vorteile und Ausgestaltungen.

Gemäß einer vorteilhaften Ausgestaltung der Erfindung werden/wird der Messwert der Spannung des externen Stromnetzes und/oder der Messwert der Frequenz des externen Stromnetzes mittels der Sekundärregelung ermittelt und/oder erfasst.

Hierzu kann die Sekundärregelung eine oder mehrere Messvorrichtungen aufweisen und/oder mit einer oder mehreren Messvorrichtungen zum Datenaustausch verbunden sein. Vorteilhafterweise können dadurch die Messwerte räumlich unabhängig vom Netzanschlusspunkt ermittelt beziehungsweise erfasst werden. Die gemessene Spannung des externen Stromnetzes und die gemessene Frequenz des externen Stromnetzes werden dann als Sollwerte beziehungsweise Referenzwerte innerhalb der Sekundärregelung verwendet.

In einer vorteilhaften Ausgestaltung der Erfindung werden das Inselnetz und das externe Stromnetz verbunden, wenn wenigstens die Spannungen und Frequenzen des Inselnetzes und des externen Stromnetzes innerhalb eines jeweiligen Toleranzbereiches übereinstimmen. Bevorzugt stimmen ebenfalls die Phasen des Inselnetzes und des externen überein, besonders bevorzugt innerhalb einer Toleranz von ±20 Grad. Für die Synchronisation kann somit - analog zur Frequenz und Spannung - ebenfalls ein Messwert der Phase des externen Stromnetzes als Sollwert für die Phase verwendet werden.

Dadurch ist vorteilhafterweise sichergestellt, dass Schäden an den Komponenten des Inselnetzes vermieden werden können. Der Toleranzbereich ist erforderlich, damit innerhalb eines angemessenen Zeitrahmens eine Synchronisation der Netze beziehungsweise Stromnetze erreicht werden kann. Der Toleranzbereich kann durch eine relative Abweichung vom jeweiligen Messwert festgelegt werden, beispielsweise ±10 Prozent, besonders bevorzugt ±5 Prozent.

Gemäß einer vorteilhaften Ausgestaltung der Erfindung werden das Inselnetz und das externe Stromnetz mittels eines Relais verbunden, wobei das Relais durch die Sekundärregelung steuerbar ist, und das Relais die Verbindung über einen Netzanschlusspunkt herstellt, wenn die Spannungen, Frequenzen und Phasen des Inselnetzes und des externen Stromnetzes innerhalb eines jeweiligen Toleranzbereiches übereinstimmen.

Dadurch können vorteilhafterweise Schäden an den Komponenten des Inselnetzes verbessert vermieden und eine verbesserte Synchronisation erreicht werden. Die Sekundärregelung kann das Relais umfassen. Weiterhin wird durch das Relais ein ausreichend schnelles Verbinden der Stromnetze ermöglicht. Bevorzugt ist das Relais hierbei in der Nähe des Netzanschlusspunktes angeordnet.

Besonders bevorzugt erfolgt die Synchronisation innerhalb von höchstens 180 Sekunden.

Dadurch wird die Synchronisation verbessert. Insbesondere wird die Einhaltung des genannten Zeitbereiches durch einen Zeitgeber (englisch: Timer) ermöglicht.

In einer vorteilhaften Ausgestaltung der Erfindung legt die Sekundärregelung die Sollwerte für die Wirkleistung und die Sollwerte für die Scheinleistung für eine Primärregelung der Komponenten des Inselnetzes fest.

Dadurch kann vorteilhafterweise sichergestellt werden, dass im Wesentlichen alle steuerbaren beziehungsweise regelbaren Komponenten des Inselnetzes zur Synchronisation verwendet werden.

Weitere Vorteile, Merkmale und Einzelheiten der Erfindung ergeben sich aus dem im Folgenden beschriebenen Ausführungsbeispielen sowie anhand der Zeichnung. Dabei zeigt die einzige Figur schematisiert ein Inselnetz und eine Sekundärregelung.

Gleichartige, gleichwertige oder gleichwirkende Elemente können in der Figur mit denselben Bezugszeichen versehen sein.

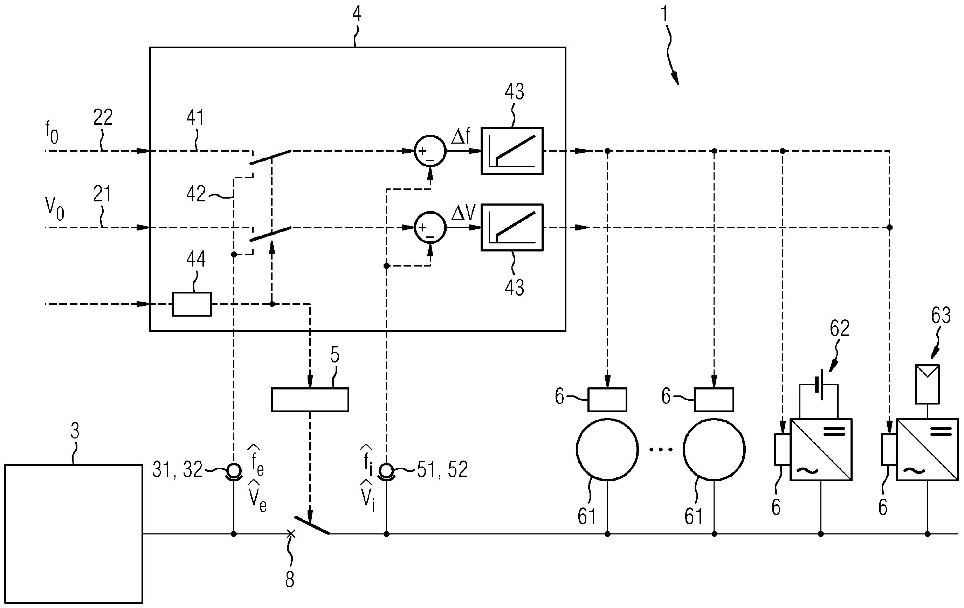

Die Figur 1 zeigt ein Inselnetz 1 und ein zur Regelung des Inselnetzes 1 vorgesehene Sekundärregelung 4.

Typischerweise ist die Sekundärregelung 4 nicht Bestandteil des Inselnetzes 1. Dies kann jedoch vorgesehen sein. Zusätzlich weist das Inselnetz 1 beziehungsweise jede Komponente 61,...,63 des Inselnetzes 1 eine Primärregelung 6 auf. In diesem Sinne ist die Sekundärregelung 4 der Primärregelung 6 vorgeschalten, das heißt bezüglich der Primärregelung 6 sekundär. Vorliegend weist das Inselnetz 6 mehrere Generatoren 61, einen Batteriespeicher 62 und eine Photovoltaikanlage 63 als Komponenten auf. Weitere Komponenten können alternativ oder ergänzend vorgesehen sein. Insbesondere bildet das Inselnetz 1 ein Energiesystem aus.

Das Inselnetz 1 ist grundsätzlich über einen Netzanschlusspunkt 8 mit einem externen Stromnetz 3 verbindbar. Hierbei wird eine Verbindung durch ein Relais 5 hergestellt, welches im Wesentlichen einen Schalter auslöst und somit den Kontakt beziehungsweise die Verbindung des Inselnetzes 1 mit dem externen Stromnetz 3 herstellt und/oder für einen Inselbetrieb trennt.

Die Sekundärregelung 4 weist weiterhin einen Zeitgeber 44 und mehrere PI-Regler 43 auf. Einer der PI-Regler 43 ist zur Regelung der Spannung innerhalb des Inselnetzes 1 und ein weiterer der PI-Regler 43 ist zur Regelung der Frequenz innerhalb des Inselnetzes 1 vorgesehen.

Das Inselnetz 1 weist wenigstens zwei Betriebsarten auf. Gemäß einer ersten Betriebsart wird das Inselnetz 1 unabhängig vom externen Stromnetz 3 betrieben (Inselbetrieb 41). Hierbei ist der Schalter am Netzanschlusspunkt 8 geöffnet. Gemäß einer zweiten Betriebsart wird das Inselnetz 2 im Verbund mit dem externen Inselnetz betrieben (Verbundbetrieb). Hierbei ist der Schalter am Netzanschlusspunkt 8 geschlossen.

Während des Inselbetriebes 41 des Inselnetzes 1 erfolgt die Regelung der Spannung und Frequenz des Inselnetzes 1 mittels der Sekundärregelung 4. Hierzu wird ein festgelegter Normwert der Spannung, beispielsweise 230 V, und ein festgelegter Normwert der Frequenz, beispielsweise 50 Hz, als Sollwerte für die Regelung verwendet.

Mittels einer oder mehreren Messungen wird ein Istwert *V̂*ᵢ 51 der Spannung (Messwert der Spannung des Inselnetzes 1) erfasst und mit dem Sollwert 21 *V*₀ der Spannung (Normwert der Spannung) verglichen. Aufgrund der Differenz zwischen dem Sollwert 21 und dem Istwert 51 der Spannung regelt einer der PI-Regler 43 der Sekundärregelung die Spannung des Inselnetzes 1. In analogerweise wird mittels einer oder mehreren Messungen ein Istwert 52 *f̂*ᵢ der Frequenz (Messwert der Frequenz des Inselnetzes 1) erfasst und mit dem Sollwert 22 *f*₀ der Frequenz (Normwert der Frequenz) verglichen. Aufgrund der Differenz zwischen dem Sollwert 22 und dem Istwert 52 der Frequenz regelt einer der PI-Regler 43 der Sekundärregelung 4 die Frequenz des Inselnetzes 1. Für die Regelung der Spannung und/oder Frequenz des Inselnetzes 1 kann dies durch Steuerbefehle beziehungsweise Regelbefehle für die Komponenten 61,...,63 des Inselnetzes 1 beziehungsweise für die jeweilige Primärregelung 6 erfolgen. Insgesamt wird dadurch die Spannungsstabilität und Frequenzstabilität des Inselnetzes 1 sichergestellt.

Während des Verbundbetriebes ist das Inselnetz 1 synchron zum externen Stromnetz 3 (bezüglich Spannung, Frequenz und Phasenwinkel). Allerdings muss hierfür, typischerweise ausgehend von einem Inselbetrieb, eine Synchronisation des Inselnetzes 1 mit dem externen Stromnetz 3 erfolgen. Mit anderen Worten wird das Inselnetz 3 nach einer dritten Betriebsart (Synchronisation beziehungsweise Synchronisationsbetrieb 42) betrieben.

Während des Synchronisationsbetriebes 42 werden für die Regelung des Inselnetzes 1 mittels der Sekundärregelung 4 nicht die Normwerte der Spannungen und Frequenzen 21, 22 verwendet, sondern Messwerte der Spannung 31 *V̂*ₑ und Messwerte der Frequenz 32 *f̂*ₑ des externen Stromnetzes 3. Mit anderen Worten sind die Sollwerte der Sekundärregelung 4 der Messwert der Spannung 31 des externen Stromnetzes 3 und der Messwert der Frequenz 32 des externen Stromnetzes 3. Mit anderen Worten wird *V*₀ = *V̂*ₑ und *f*₀ = *f̂*ₑ festgelegt.

Die Messwerte 31, 32 können mittels einer Messvorrichtung regelmäßig, diskret oder kontinuierlich erfasst werden. Diese können dann entsprechend regelmäßig, diskret oder kontinuierlich als Sollwerte bei der Sekundärregelung 4 verwendet werden. Mit anderen Worten können die Sollwerte der Sekundärregelung 4 mehrmals innerhalb des Zeitbereiches des Synchronisationsbetriebes 42 gemäß der vorliegenden Erfindung angepasst beziehungsweise verändert werden. Der Synchronisationsbetrieb 42 wird typischerweise maximal für 180 Sekunden durchgeführt. Nach dem genannten Zeitbereich sollte das Inselnetz 1 mit dem externen Stromnetz 3 synchronisiert sein, sodass ein entsprechendes Signal durch den Zeitgeber 44 an das Relais 5 gegeben wird, wodurch das Relais 5 den Schalter am Netzanschlusspunkt 5 schließt, das heißt das eine elektrische Verbindung zum externen Stromnetz 3 hergestellt wird.

Demnach werden aktuelle Messwerte der Spannung und der Frequenz 31, 32 des externen Stromnetzes 3 für die Sekundärregelung 4 als Sollwerte beim Synchronisationsbetrieb 42 verwendet.

Obwohl die Erfindung im Detail durch die bevorzugten Ausführungsbeispiele näher illustriert und beschrieben wurde, so ist die Erfindung nicht durch die offenbarten Beispiele eingeschränkt oder andere Variationen können vom Fachmann hieraus abgeleitet werden, ohne den Schutzumfang der Erfindung zu verlassen.

### Bezugszeichenliste

- 1: Inselnetz
- 3: Externes Stromnetz
- 4: Sekundärregelung
- 5: Relais
- 6: Primärregelung
- 8: Netzanschlusspunkt
- 21: Normwert der Spannung
- 22: Normwert der Frequenz
- 31: Messwert der Spannung des externen Netzes
- 32: Messwert der Frequenz des externen Netzes
- 41: Inselbetrieb
- 42: Synchronisationsbetrieb
- 43: PI-Regler
- 44: Zeitgeber
- 51: Messwert der Spannung des Inselnetzes
- 52: Messwert der Frequenz des Inselnetzes
- 61: Wechselstromgenerator
- 62: Batteriespeicher
- 63: Photovoltaikanlage

## Patentansprüche

1. Verfahren zur Synchronisation eines Inselnetzes (1) mit einem bezüglich des Inselnetzes externen Stromnetzes (3), wobei das Inselnetz (1) im Inselbetrieb (41) durch eine Sekundärregelung (4) bezüglich seiner Spannung und Frequenz regelbar ist, und für die Sekundärregelung (4) als Sollwerte ein Normwert der Spannung (21) des Inselnetzes (1) und ein Normwert der Frequenz (22) des Inselnetzes (1) verwendet werden, **gekennzeichnet dadurch, dass** zur Synchronisation ein Messwert der Spannung (31) des externen Stromnetzes (3) und ein Messwert der Frequenz (32) des externen Stromnetzes (3) als Sollwerte der Sekundärregelung (4) verwendet werden.

2. Verfahren gemäß Anspruch 1, **gekennzeichnet dadurch, dass** der Messwert der Spannung (31) des externen Stromnetzes (3) und/oder der Messwert der Frequenz (32) des externen Stromnetzes (3) mittels der Sekundärregelung (4) ermittelt werden/wird.

3. Verfahren gemäß Anspruch 1 oder 2, **gekennzeichnet dadurch, dass** das Inselnetz (1) und das externe Stromnetz (3) verbunden werden, wenn wenigstens die Spannungen und Frequenzen des Inselnetzes (51, 52) und des externen Stromnetzes (31, 32) innerhalb eines jeweiligen Toleranzbereiches übereinstimmen.

4. Verfahren gemäß Anspruch 3, **gekennzeichnet dadurch, dass** das Inselnetz (1) und das externe Stromnetzes (3) mittels eines Relais (5) verbunden werden, wobei das Relais (5) durch die Sekundärregelung (4) steuerbar ist, und das Relais (5) die Verbindung über einen Netzanschlusspunkt (8) herstellt, wenn die Spannungen, Frequenzen und Phasen des Inselnetzes (31, 32) und des externen Stromnetzes (51, 52) innerhalb eines jeweiligen Toleranzbereiches übereinstimmen.

5. Verfahren gemäß einem der vorhergehenden Ansprüche, **gekennzeichnet dadurch, dass** die Synchronisation innerhalb von höchstens 180 Sekunden erfolgt.

6. Verfahren gemäß einem der vorhergehenden Ansprüche, **gekennzeichnet dadurch, dass** die Sekundärregelung (4) die Sollwerte für die Wirkleistung und die Sollwerte für die Scheinleistung für eine Primärregelung (6) der Komponenten (61,...,63) des Inselnetzes (1) festlegt.

7. Sekundärregelung (4) eines Inselnetzes (1), **dadurch gekennzeichnet, dass** die Sekundärregelung (4) zur Durchführung eines Verfahrens gemäß einem der vorhergehenden Ansprüche ausgebildet ist.
